# EUROPEAN PATENT APPLICATION

(11) **EP 3 042 750 A1**
(43) Date of publication of application: **13.07.2016**
(21) Application number: 15150484.2
(22) Date of filing: 08.01.2015
(51) Int. Cl.: B29C 67/00, B33Y 80/00, B22F 3/105, B60B 19/00, B29L 31/32

(54) **Component with grating surface and method for manufacturing a component with a grating surface**

(71) Applicant: Airbus Operations GmbH, 21129 Hamburg (DE)
(72) Inventor: Soller, Jochen, 21129 Hamburg (DE); Sander, Peter, 21129 Hamburg (DE); Kolarski, Robertino, 21129 Hamburg (DE); Radny, Matthias, 21129 Hamburg (DE)
(74) Representative: Isarpatent

(57) **Abstract**

A component (10, 20) includes at least one component portion (L) with at least one surface thereof manufactured as grating surface (L1, L2, L3). A method (M) for manufacturing a component (10, 20) comprises manufacturing (M2) at least one surface of at least one component portion (L) of the component (10, 20) as grating surface (L1, L2, L3).

## Description

The present invention relates to a component with a grating surface and a method for manufacturing a component with a grating surface, in particular by using additive layer manufacturing (ALM), selective laser sintering (SLS) and/or solid freeform fabrication (SFF) processes.

Conventional commercial aircraft food and drink dispensing push carts, storage carts, wheeled chairs and the like bear caster assemblies which are relatively heavy and cumbersome and include steel wheels and brackets and the like. It has been found that such assemblies considerably increase the weight of furniture to which they are attached. The extra weight of the caster assemblies significantly increases aircraft load and thus fuel requirements for the aircraft, thereby increasing the costs and ecological footprint of operating the aircraft.

Improved solutions for fuel conservation in aviation are generally desirable due requirements of airlines to compete economically for passengers. Amongst others, it would be desirable to obtain improved aircraft furniture which will reduce aircraft fuel costs substantially.

Document EP 0 221 366 A2 discloses a lightweight aircraft furniture caster assembly. Document US 5,570,764 A discloses a roller wheel assembly for a piece of luggage with an elongated wheel equipped with two circular end plates and a rigid transverse webbing extending radially between the inner surfaces of the end plates. Document US 2008/0078138 A1 discloses a high-strength yet lightweight material composed of interconnected struts used to create lattice structures in the shape of hollow cylinders.

One object of the invention is therefore to provide solutions for components and objects, particularly in aviation, that employ a lightweight design approach for reduced system weight of aircraft and spacecraft, while at the same time not abandoning any mechanical stability and reliability for the components and objects.

This object is achieved by a component having the features of claim 1 and a method for manufacturing a component having the features of claim 10.

A first aspect of the invention pertains to a component, comprising at least one component portion with at least one surface thereof manufactured as grating surface.

According to a second aspect of the invention, a method for manufacturing a component comprises manufacturing at least one surface of at least one component portion of the component as grating surface.

The idea on which the present invention is based is to design a lightweight component through topology optimization. Conventional parts or components may thus be applied with a "cage design" where otherwise solid surfaces are replaced with a patterned surface with cut-out portions. Similarly, portions of the component may be formed with "caged" surfaces as well in order to enhance the structural stiffness of the component overall.

In both cases, the amount of material needed for forming the surfaces of the stiffness enhancing parts is minimized. Thus, a component manufactured in such a way offers advantageous savings in weight, which is specifically advantageous in aviation and avionics.

The solution of the invention offers great advantages for 3D printing or additive manufacturing (AM) technology since 3D components or objects may be printed without the additional need for subjecting the components or objects to further processing steps such as milling, cutting or drilling. This allows for a more efficient, material saving and time saving manufacturing process for objects.

Particularly advantageous in general is the reduction of costs, weight, lead time, part count and manufacturing complexity coming along with employing AM technology for printing structural components or other objects used for, employed in or being part of airborne vehicles. Moreover, the geometric shape of the printed structural components or objects may be flexibly designed with regard to the intended technical purpose of parts or regions of the component/object.

According to an embodiment of the component, the at least one surface of the at least one component portion may comprise a parametric three-dimensional surface of a predetermined thickness.

According to another embodiment of the component, the grating surface may comprise cut-out portions in the parametric three-dimensional surface. Such cut-out portion may in one embodiment comprise lozenges or squares. In alternative embodiment, the cut-out portions may comprise rectangles with rounded corners.

According to another embodiment of the component, a first region of the grating surface may comprise lozenges or squares as cut-out portions and a second region of the grating surface may comprise rectangles with rounded corners as cut-out portions.

According to another embodiment of the component, the component may be a roller wheel. In further embodiments, the at least one component portion may a running surface or an inner reinforcement shell of the roller wheel.

According to an embodiment of the method, the step of manufacturing may be performed with a 3D printing process.

According to another embodiment of the method, the method may further comprise topologically optimizing the structure of the grating surface. Such topologically optimizing may comprise in one further embodiment applying a biomimetic design approach to implementing the structure of the grating surface.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an exemplary component or object in isometric view according to an embodiment of the invention.
Fig. 2 schematically illustrates another exemplary component or object according to a further embodiment of the invention.
Fig. 3 schematically illustrates a flow diagram of a method for manufacturing a component according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Additive layer manufacturing (ALM), selective laser sintering (SLS) and solid freeform fabrication (SFF) techniques, generally termed as 3D printing techniques, may be used in procedures for building up three-dimensional solid objects based on digital model data. 3D printing is currently used for prototyping and distributed manufacturing with multiple applications in engineering, construction, industrial design, automotive industries and aerospace industries.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods. Those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality AM or 3D printing techniques usually include selectively depositing material layer by layer, selectively fusing or solidifying the material and removing excess material, if needed.

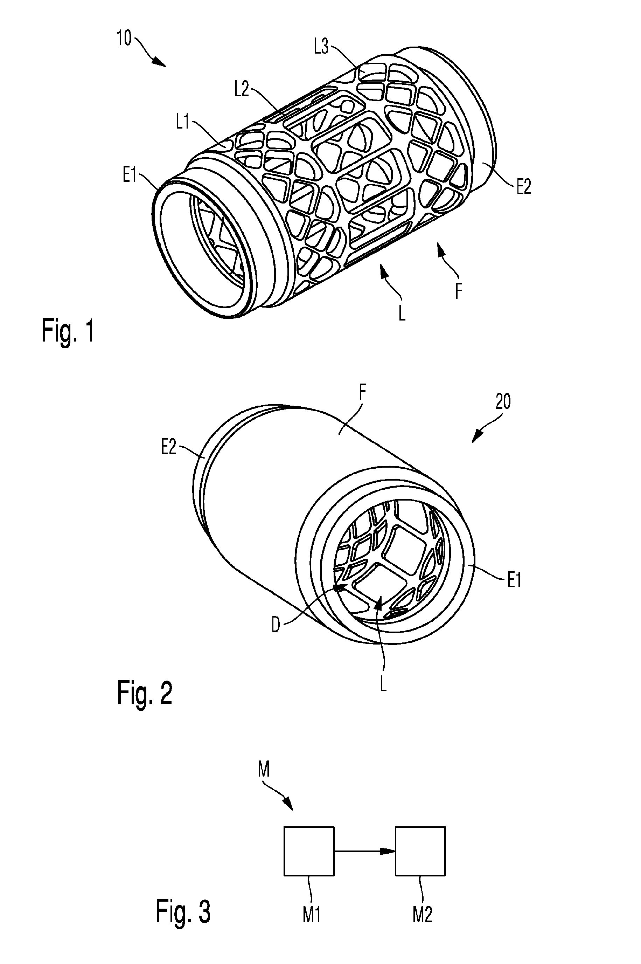

Fig. 1 schematically illustrates an exemplary structural component 10 in isometric view. The structural component 10 may be any type of shaped component that may be integrally manufactured using an AM or 3D printing technique. The structural component 10 may in particular be fabricated integrally, from any material suitable for an AM or 3D printing technique. Such 3D printing process may involve selectively depositing material layer by layer with the deposited material layers being coplanar to each other and having a normal axis corresponding to the 3D printing direction.

The component 10 comprises at least one component portion L that has at least one surface thereof manufactured as grating surface. The surface of the component portion L may for example be a parametric three-dimensional surface of predetermined thickness, such as a lateral surface of a tube or hollow cylinder.

For example, the component 10 may be a roller wheel. Such roller wheels may be employed in caster assemblies for push carts, storage carts, wheeled chairs or similar movable furniture that may be employed in aircraft. The roller wheel 10 has two bearing portions E1 and E2 at respective ends of a hollow cylinder or tube with a lateral surface or shell surface thereof being formed as grating surface L. The grating surface L may in particular serve as running surface for the roller wheel.

It may be possible to provide surface portions L1, L2, L3 with different grating patterns. The grating patterns are shaped in such a way that the grating surface L1, L2, L3 comprises cut-out portions in the parametric three-dimensional surface. For example, in a first region L1, the grating surface may comprise crosshatched struts or interconnecting beams, thereby forming the cut-out portions as lozenges or squares. In a second region L2, the grating surface may comprise rectangularly meshed struts or interconnecting beams, thereby forming the cut-out portions as rectangles with rounded corners. The running surface of the roller wheel may be formed with a sequence of different regions L1, L2, L3. For example, there may be two regions L1, L3 with cut-out portions as lozenges or squares sandwiching another region L2 in between with cut-out portions as rectangles with rounded corners. Such sequence of different grating patterns may be topologically optimized depending on the expected mechanical stress patterns or forces acting on the component 10 in use.

Fig. 2 schematically illustrates another exemplary structural component 20 in isometric view. The structural component 20 of Fig. 2 differs from the component 10 in Fig. 1 mainly in that the component 20 forms a roller wheel with a solid running surface F as outer shell. The component 20 comprises an inner reinforcement shell D that may be formed with at least one surface thereof being a grating surface L. The grating surface L of the inner reinforcement shell D may be similarly patterned as the grating surface L of Fig. 1.

The inner reinforcement shell D may serve as component that enhances the structural stiffness of the roller wheel 20. This increase in mechanical stability may allow for forming the solid running surface F of the roller wheel 20 to be formed with a smaller thickness than otherwise needed. In that manner, material needed to form the roller wheel 20 and thus weight of the overall component may be advantageously saved.

Fig. 3 shows a schematic illustration of a flow diagram of a method M for manufacturing a component having a grated surface, such as for example the component 10 as depicted in Fig. 1 or the component 20 as depicted in Fig. 2. At M1, a structure of a grating surface L1, L2, L3 of at least one surface of at least one component portion L of the component 10, 20 may be topologically optimized, for example by employing a "natural" biomimetic design approach in implementing the structure of the grating surface L1, L2, L3. This approach may consider omitting material of an otherwise solid surface at regions where the mechanical forces during intended operation of the component to be manufactured are below a predeterminable threshold. For example, otherwise solid surface may be replaced by a meshed structure of lattice elements like struts and crosshatched beams that run along lines of higher mechanical stress.

At M2, the method M comprises manufacturing the possibly topologically optimized component 10, 20 in such a way that at least one surface of at least one component portion L of the component 10, 20 is formed as grating surface. This may for example be performed using a 3D printing process.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 10: Component
- 20: Component
- D: Inner reinforcement shell
- E1: Bearing portion
- E2: Bearing portion
- F: Roller running surface
- L: Grating portion
- L1: Grating framework
- L2: Grating framework
- L3: Grating framework
- M: Method
- M1: Method step
- M2: Method step

## Claims

1. Component (10; 20), comprising:
at least one component portion (L) with at least one surface thereof manufactured as grating surface (L1; L2; L3).

2. Component (10; 20) according to claim 1, wherein the at least one surface of the at least one component portion (L) comprises a parametric three-dimensional surface of a predetermined thickness.

3. Component (10; 20) according to claim 2, wherein the grating surface (L1; L2; L3) comprises cut-out portions in the parametric three-dimensional surface.

4. Component (10; 20) according to claim 3, wherein the cut-out portions of the grating surface (L1; L3) comprise lozenges or squares.

5. Component (10; 20) according to claim 3, wherein the cut-out portions of the grating surface (L2) comprise rectangles with rounded corners.

6. Component (10; 20) according to claim 3, wherein a first region of the grating surface (L1; L3) comprises lozenges or squares as cut-out portions and a second region of the grating surface (L2) comprises rectangles with rounded corners as cut-out portions.

7. Component (10; 20) according to one of the claims 1 to 6, wherein the component (10; 20) is a roller wheel.

8. Component (10; 20) according to claim 7, wherein the at least one component portion (L) is a running surface (F) of the roller wheel (10).

9. Component (10; 20) according to claim 7, wherein the at least one component portion (L) is an inner reinforcement shell (D) of the roller wheel (20).

10. Method (M) for manufacturing a component (10; 20) of one of the claims 1 to 9, the method (M) comprising:
manufacturing (M2) at least one surface of at least one component portion (L) of the component (10; 20) as grating surface (L1; L2; L3).

11. Method (M) according to claim 10, wherein the step of manufacturing (M2) is performed with a 3D printing process.

12. Method (M) according to one of the claims 10 and 11, further comprising:
topologically optimizing (M1) the structure of the grating surface (L1; L2; L3).

13. Method (M) according to claim 12, wherein topologically optimizing (M1) the structure of the grating surface (L1; L2; L3) comprises applying a biomimetic design approach to implementing the structure of the grating surface (L1; L2; L3).

14. Computer-readable medium comprising computer-executable instructions which, when executed on a data processing apparatus, cause the data processing apparatus to perform the method according to one of the claims 10 to 13.
